# EUROPÄISCHE PATENTSCHRIFT

(11) **EP 1 769 978 B1**
(45) Veröffentlichungstag und Bekanntmachung des Hinweises auf die Patenterteilung: **27.02.2008**
(21) Anmeldenummer: 05021332.1
(22) Anmeldetag: 29.09.2005
(51) Int. Cl.: B60R 21/16

(54) **Luftsackmodul mit Abströmöffnung**
Airbag module with vent
Coussin gonflable avec trou

(43) Veröffentlichungstag der Anmeldung: 04.04.2007
(60) Teilanmeldung: 06008946.3
(73) Patentinhaber: Delphi Technologies, Inc., Troy, MI 48007 (US)
(72) Erfinder: Adomeit, Julius, 14195 Berlin (DE); Jungbauer, Peter, 86556 Unterbernbach (DE); Marotzke, Thomas, 16562 Bergfelde (DE)
(74) Vertreter: Manitz, Finsterwald & Partner GbR

(56) Entgegenhaltungen:
- US-A1- 2003 020 266
- US-A1- 2003 075 223
- US-A1- 2004 012 180
- US-A1- 2004 232 676

## Beschreibung

Die Erfindung betrifft ein Luftsackmodul für ein Kraftfahrzeug mit einem mindestens eine Abströmöffnung aufweisenden aufblasbaren Luftsack, einem Verschlusselement zum Verschließen der Abströmöffnung und einem ein pyrotechnisches Zündelement umfassenden Schaltmechanismus, wobei das Verschlusselement durch den Schaltmechanismus in einer die Abströmöffnung verschließenden Lage gehalten und durch eine Auslösung des Zündelements zur Öffnung der Abströmöffnung mit dem Schaltmechanismus außer Eingriff bringbar ist.

Ein derartiges Luftsackmodul ist grundsätzlich bekannt. US 2003/0020266 die als nächstliegender Stand der Technik betractet wird, offenbart einen Luftsackmodul mit den Merkmalen des Oberbegriffs des unabhängigen Anspruchs 1. Bei der Abströmöffnung handelt es sich um eine Öffnung des Luftsacks, die zusätzlich zu einer Öffnung vorgesehen ist, durch welche der Luftsack aufgeblasen wird. Die Abströmöffnung ermöglicht ein gezieltes Auslassen von Gas aus dem aufgeblasenen Luftsack und somit eine Anpassung des aufgeblasenen Luftsacks an die Größe bzw. das Gewicht eines zu schützenden Fahrzeuginsassen und/oder an die Stärke eines Aufpralls, welcher zu der Aktivierung des Luftsackmoduls führt.

Die Schaltmechanismen bekannter Luftsackmodule erweisen sich in der Praxis als problematisch, da sie entweder nicht schnell genug aktiviert werden können, den aufgeblasenen Luftsack nur begrenzt entlüften können, aufgrund ihres komplizierten Aufbaus teuer sind und/oder wegen ihrer Baugröße die Flexibilität bei der Gestaltung des Luftsackmoduls einschränken. Bei der Betätigung anderer bekannter Schaltmechanismen lösen sich außerdem Bauteile, welche durch den aufgeblasenen Luftsack ausgestoßen und einen Fahrzeuginsassen verletzen können.

Der Erfindung liegt die Aufgabe zugrunde, ein Luftsackmodul mit einem einfacheren und kompakteren Schaltmechanismus zu schaffen, welches außerdem einen verbesserten Fahrzeuginsassenschutz gewährleistet.

Zur Lösung der Aufgabe ist ein Luftsackmodul mit den Merkmalen des Anspruchs 1 vorgesehen.

Das Luftsackmodul nach Anspruch 1 zeichnet sich dadurch aus, dass das Verschlusselement in seiner die Abströmöffnung verschließenden Lage mit dem Zündelement in Eingriff steht und das Zündelement derart angeordnet ist, dass es sich bei seiner Auslösung relativ zum Verschlusselement bewegen kann, um das Verschlusselement freizugeben.

Bei dieser ersten Variante des erfindungsgemäßen Luftsackmoduls wirkt das Verschlusselement direkt mit dem Zündelement zusammen. Beispielsweise kann sich ein Abschnitt des Zündelements zum Halten des Verschlusselements durch eine Öffnung des Verschlusselements hindurch erstrecken. Das Zündelement bildet somit gewissermaßen einen Verriegelungsbolzen zur Fixierung des Verschlusselements in dessen die Abströmöffnung verschließenden Lage.

Vorzugsweise ist das Zündelement in der das Verschlusselement fixierenden Lage seinerseits fixiert und gegen unbeabsichtigte Bewegungen gesichert. Auf diese Weise werden eine unbeabsichtigte Freigabe des Verschlusselements und eine unerwünschte Geräuschentwicklung, z.B. von Klappergeräuschen, vermieden.

Zur Öffnung der Abströmöffnung tritt das Zündelement durch eine eigene Bewegung mit dem Verschlusselement außer Eingriff. Bevorzugt ist das Zündelement zu diesem Zweck bezüglich des Verschlusselements verschiebbar. Eine Öffnung der Abströmöffnung ist während des Aufblasvorgangs oder im vollständig aufgeblasenen Zustand des Luftsacks jederzeit durch eine Auslösung des Zündelements erreichbar.

Durch das direkte Zusammenwirken von Zündelement und Verschlusselement wird eine besonders schnelle Öffnung der Abströmöffnung erreicht. Da das Verschlusselement bei Auslösung des Zündelements vollständig von dem Verschlusselement entkoppelt wird, ist eine unbegrenzte Entlüftung des aufgeblasenen Luftsacks möglich. Des weiteren lösen sich bei der Aktivierung des Schaltmechanismus keine Bauteile, die aus dem sich aufblasenden Luftsack herausgeschleudert werden und einen Fahrzeuginsassen verletzen könnten. Außerdem ermöglicht die Ausbildung des Schaltmechanismus während der Montage des Luftsackmoduls eine optische Kontrolle der Verankerung des Verschlusselements an dem Zündelement, wodurch eine zuverlässige Funktion des Luftsackmoduls sichergestellt werden kann. Dies alles trägt zu einem verbesserten Fahrzeuginsassenschutz bei.

Darüber hinaus ist die Konstruktion des Schaltmechanismus erheblich vereinfacht. Insbesondere sind keine zusätzlichen Bauteile erforderlich, um die durch das ausgelöste Zündelement freigesetzte Energie in die Freigabe des Verschlusselements umzusetzen. Die Anzahl der Bauteile des Schaltmechanismus ist somit auf ein Minimum reduziert. Der Schaltmechanismus ist dadurch nicht nur besonders kompakt, sondern auch mit einem geringen wirtschaftlichen Aufwand herstellbar.

Gemäß einer vorteilhaften Ausführungsform ist das Zündelement in einem Führungsgehäuse eines Trägers für einen Gasgenerator zum Aufblasen des Luftsacks gelagert.

Alternativ kann das Zündelement mittels einer Klemmvorrichtung an dem Gasgeneratorträger gehalten sein. Zur Befestigung des Zündelements an dem Gasgeneratorträger braucht das Zündelement in diesem Fall lediglich in die Klemmvorrichtung hineingedrückt zu werden. Dies stellt eine besonders einfache Form der Fixierung des Zündelements an dem Gasgeneratorträger dar. Bevorzugt ist die durch die Klemmvorrichtung auf das Zündelement ausgeübte Klemmkraft so bemessen, dass eine Verschiebung des Zündelements relativ zum Gasgeneratorträger und somit auch relativ zum Verschlusselement möglich ist.

Vorzugsweise ist eine Prallwand im Bereich einer sich bei Auslösung des Zündelements öffnenden Stirnseite des Zündelements vorgesehen. Bei der Prallwand handelt es sich bevorzugt um eine an dem Gasgeneratorträger fest ausgebildete Wand. Bei einer Zündung des Zündelements wird zwischen der Prallwand und der Stirnseite des Zündelements ein Rückstoß und/oder ein Gasdruck erzeugt, durch welchen das Zündelement von der Prallwand wegbewegt, insbesondere weggeschoben, wird, um das Verschlusselement zur Öffnung der Abströmöffnung freizugeben. Denkbar ist auch, dass das Zündelement ausschließlich durch den bei seiner Auslösung erzeugten Rückstoß bewegt wird, um das Verschlusselement freizugeben. In diesem Fall kann auf eine Prallwand verzichtet werden.

In der Prallwand kann ein Entlüftungskanal vorgesehen sein, durch den ein Gasdruck reduzierbar ist, welcher bei Auslösung des Zündelements zwischen dem Zündelement und der Prallwand aufgebaut wird. Durch eine geeignete Dimensionierung des Entlüftungskanals lässt sich der Druckaufbau bzw. -abbau zwischen der Prallwand und dem Zündelement steuern und somit der Bewegungsverlauf des Zündelements relativ zum Verschlusselement bzw. zum Gasgeneratorträger einstellen.

Vorteilhafterweise ist ein Anschlag vorgesehen, um die zur Freigabe des Verschlusselements erfolgende Bewegung des Zündelements zu begrenzen. Der Anschlag kann durch einen Vorsprung des Gasgeneratorträgers gebildet sein, welcher im Bereich einer von der Prallwand abgewandten Stirnseite des Zündelements angeordnet ist. Der Anschlag verhindert, dass das Zündelement bei seiner Zündung eine unkontrollierte Bewegung ausführt.

Das Verschlusselement kann ein Halteband umfassen, welches im Bereich seines der Abströmöffnung entgegengesetzten Endes eine Öffnung oder Schlaufe aufweist, um mit dem Schaltmechanismus und insbesondere mit dem Haken bzw. einem Abschnitt des Zündelements zusammenzuwirken.

Des weiteren kann das Verschlusselement zur Verankerung an dem Schaltmechanismus entweder innerhalb oder außerhalb des Luftsacks durch einen Gasgeneratorträger hindurchgeführt sein. Eine Durchführung innerhalb des Luftsacks bietet sich in solchen Fällen an, in denen der Schaltmechanismus besonders nahe an dem Gasgenerator angeordnet ist, wohingegen eine Durchführung außerhalb des Luftsacks dann in Betracht kommt, wenn der Schaltmechanismus weiter entfernt von dem Gasgenerator angeordnet ist und sich insbesondere auf der von dem Gasgenerator abgewandten Seite eines Bereichs befindet, in welchem die Befestigung des Luftsacks an dem Gasgeneratorträger erfolgt.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine perspektivische Ansicht eines Gasgeneratorträgers, eines Zündelements und einer Luftsackhalteplatte eines erfindungsgemäßen Luftsackmoduls;
- Fig. 2: eine Querschnittsansicht eines Schaltmechanismus des Luftsackmoduls von Fig. 1 mit nicht ausgelöstem Zündelement;
- Fig. 3: eine Querschnittsansicht des Schaltmechanismus von Fig. 2 mit gezündetem Zündelement;
- Fig. 4: eine alternative Ausführungsform des Schaltmechanismus von Fig. 2;

- Fig. 5: ein Klemmelement zur Lagerung des Zündelements des Schaltmechanismus von Fig. 4;
- Fig. 6: eine perspektivische Ansicht eines Gasgeneratorträgers, eines Zündelements, eines Zündelementgehäuses und einer Luftsackhalteplatte eines Luftsackmodulsgemäß einer Variante, die nicht Gegenstand der Erfindung ist; und
- Fig. 7: eine Querschnittsansicht des in eine Aussparung des Gasgeneratorträgers eingesetzten Zündelements und Zündelementgehäuses von Fig. 6.

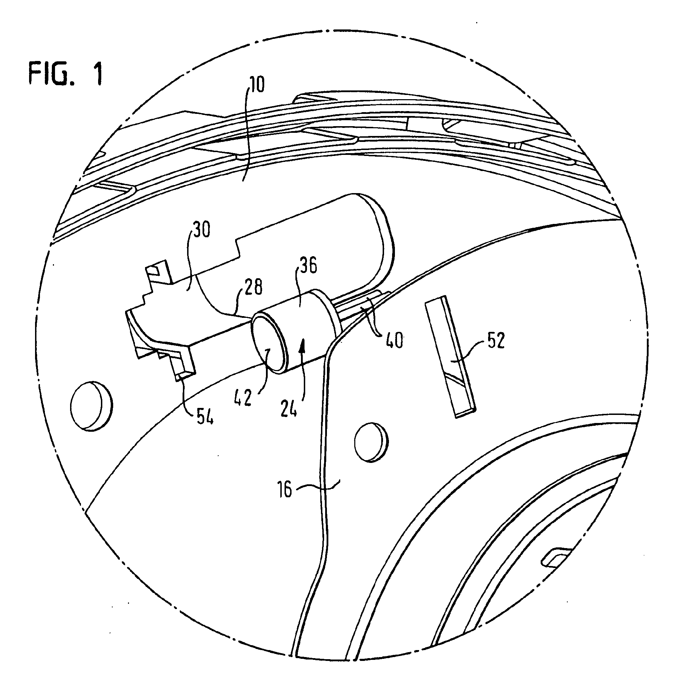

In Fig. 1 ist ein erfindungsgemäßes Luftsackmodul dargestellt. Das Luftsackmodul umfasst einen Gasgeneratorträger 10, an dem ein Gasgenerator 12 zum Aufblasen eines Luftsacks 14 des Luftsackmoduls befestigbar ist.

Zur Anbringung des Luftsacks 14 an dem Gasgeneratorträger 10 ist eine Luftsackhalteplatte 16 vorgesehen, die so auf den Gasgeneratorträger 10 aufsetzbar und mit diesem verschraubbar ist, dass ein umlaufender Randabschnitt 18 des Luftsacks 14 zwischen dem Gasgeneratorträger 10 und der Luftsackhalteplatte 16 eingeklemmt wird. Im dargestellten Ausführungsbeispiel ist die Luftsackhalteplatte 16 Teil eines Gasgeneratorflansches. Alternativ ist es jedoch auch möglich, die Luftsackhalteplatte 16 als ein von einem Gasgeneratorflansch getrenntes Bauteil auszubilden.

Der Luftsack 14 weist mindestens eine nicht gezeigte Abströmöffnung zur Entlüftung des Luftsacks 14 auf, durch welche - zusätzlich zu einer normalerweise ohnehin erfolgenden Abströmung des Luftsacks 14 - die Härte des aufgeblasenen Luftsacks 14 an einen zu schützenden Fahrzeuginsassen und/oder an die Stärke des zur Auslösung des Luftsackmoduls führenden Aufpralls anpassbar ist.

Sofern keine zusätzliche Abströmung des Luftsacks 14 erforderlich ist, wird die Abströmöffnung durch ein Verschlusselement verschlossen gehalten, welches mit einem Halteband 22 verbunden ist oder zumindest in einem von der Abströmöffnung abgewandten Bereich als Halteband 22 ausgebildet ist. Das Halteband 22 ist im Bereich seines von der Abströmöffnung abgewandten Endes mittels eines Schaltmechanismus an dem Gasgeneratorträger 10 verankert. Bei Bedarf kann das Halteband 22 durch eine Betätigung des Schaltmechanismus von diesem losgelöst und zur Öffnung der Abströmöffnung freigegeben werden.

Der Schaltmechanismus der ersten Luftsackmodulvariante ist durch ein pyrotechnisches Zündelement 24 gebildet, welches an einer von der Luftsackhalteplatte 16 abgewandten Unterseite 26 des Gasgeneratorträgers 10 angeordnet und so fixiert ist, dass es im Falle seiner Auslösung bewegt werden kann. Genauer gesagt ist das Zündelement 24 in einer zu der Unterseite 26 parallelen Richtung verschiebbar in einer Zündelementführung gelagert.

Bei der in Fig. 1 bis 3 dargestellten Ausführungsform ist die Führung durch ein einstückig mit dem Gasgeneratorträger 10 ausgebildetes Führungsgehäuse 28 gebildet, welches einen an die äußere Form des Zündelements 24 angepassten Aufnahmeraum 30 aufweist. Der Aufnahmeraum 30 ist an einer Vorderseite durch eine Prallwand 32 begrenzt und weist an einer der Prallwand 32 gegenüberliegenden Rückseite eine Ausstoßöffnung 34 auf.

Das Zündelement 24 umfasst einen zylindrischen Hauptabschnitt 36, an dessen Rückseite sich ein Anschlussabschnitt 38 mit elektrischen Kontakten 40 anschließt, welcher zur Verbindung des Zündelements 24 mit einer Zündelektronik dient. In dem Hauptabschnitt 36 des Zündelements 24 ist eine Zündladung untergebracht, die bei einer Zündung des Zündelements 24 eine vordere Stirnseite 42 des Zündelements 24 öffnet.

Das Zündelement 24 ist so in den Aufnahmeraum 30 des Führungsgehäuses 28 eingesetzt, dass die vordere Stirnseite 42 der Prallwand 32 gegenüberliegt. In dem Gehäuse 28 ist im Bereich der Prallwand 32 eine Schulter 48 ausgebildet, an die der Hauptabschnitt 36 des Zündelements 24 anstoßen kann, um eine korrekte Positionierung des Zündelements 24 in dem Gehäuse 28 und insbesondere einen vorbestimmten Abstand zwischen der vorderen Stirnseite 42 des Zündelements 24 und der Prallwand 32 sicherzustellen. Durch die vorderen Stirnseite 42 des Zündelements 24 und die Prallwand 32 wird ein Druckraum 46 begrenzt, in welchem bei Auslösung des Zündelements 24 ein Gasdruck und/oder ein Rückstoß erzeugt werden bzw. wird.

Am Gehäuse 28 können ferner Mittel vorgesehen sein, um im Bereich des Anschlussabschnitts 38 mit dem Zündelement 24 zusammenzuwirken und das Zündelement 24 in seiner korrekten Position zu sichern bzw. eine Bewegung des Zündelements 24 bei dessen Auslösung zuzulassen.

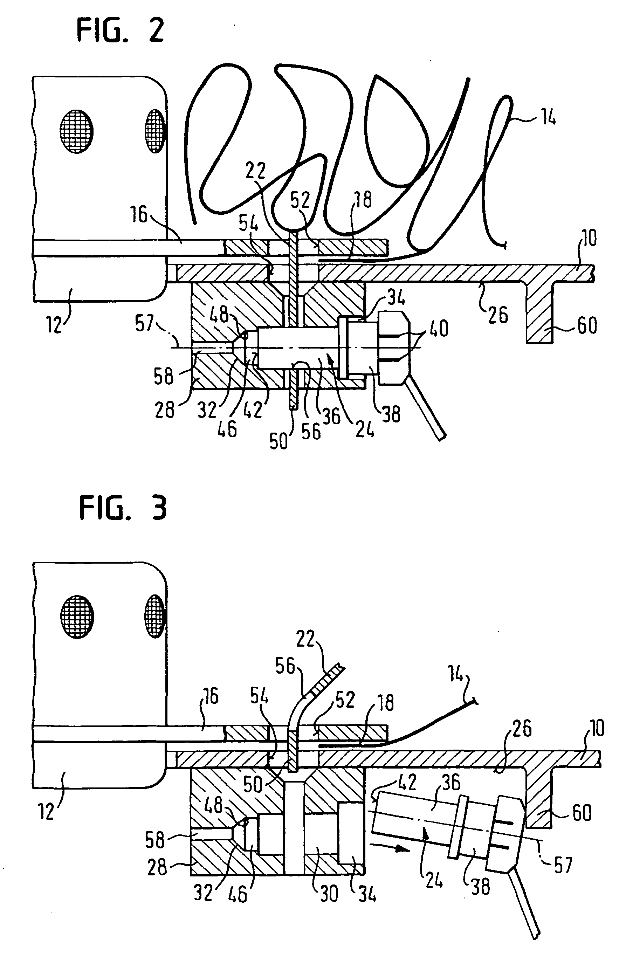

Wie in Fig. 2 gezeigt ist, ragt ein Endabschnitt 50 des Haltebands 22 quer zur Längserstreckung des Zündelements 24 in das Führungsgehäuse 28 hinein. In der Luftsackhalteplatte 16 und in dem Gasgeneratorträger 10 ist zu diesem Zweck jeweils eine schlitzförmige Durchgangsöffnung 52, 54 vorgesehen.

Der Endabschnitt 50 des Haltebands 22 weist eine Öffnung 56 auf, durch die sich der vordere Abschnitt 36 des Zündelements 24 nach Art eines Verriegelungsbolzens hindurch erstreckt. Auf diese Weise ist der Endabschnitt 50 des Haltebands 22 an dem Zündelement 24 und somit letztlich an dem Gasgeneratorträger 10 verankert.

Bei einer Auslösung des Zündelements 24 bricht die entzündete Zündladung die vordere Stirnseite 42 des vorderen Zündelementabschnitts 36 auf, und es wird ein Gasdruck in dem Druckraum 46 erzeugt. Da der Druckraum 46 mit Ausnahme der vorderen Stirnseite 42 des Zündelements 24 ausschließlich von festen Wänden des Führungsgehäuses 28 begrenzt ist, wird das Zündelement 24 durch den erzeugten Rückstoß und/oder Gasdruck durch die Ausstoßöffnung 34 aus dem Führungsgehäuse 28 herausgeschoben.

Dadurch werden der Endabschnitt 50 des Haltebands 22 und der vordere Abschnitt 36 des Zündelements 24 außer Eingriff gebracht. Das auf diese Weise von seiner Verankerung losgelöste und freigeschaltete Halteband 22 kann sich folglich aus dem Führungsgehäuse 28 herausbewegen und eine Öffnung der Abströmöffnung des Luftsacks 14 bewirken.

Wie Fig. 2 und 3 zeigen, ist in der Prallwand 32 ein sich etwa koaxial mit der Längsmittelachse 57 des in den Aufnahmeraum 30 eingesetzten Zündelements 24 erstreckender Entlüftungskanal 58 ausgebildet, welcher den Druckraum 46 mit der Umgebung des Führungsgehäuses 28 verbindet. Der Entlüftungskanal 58 ermöglicht einen Abbau des bei Zündung des Zündelements 24 in dem Druckraum 46 erzeugten Gasdrucks, wodurch eine kontrollierte Rückwärtsbewegung des Zündelements 24 aus dem Führungsgehäuse 28 heraus erreicht wird.

Um eine unkontrollierte Bewegung des Zündelements 24 nach dem Austritt aus dem Führungsgehäuse 28 zu verhindern, ist außerdem ein Anschlag 60 vorgesehen, welcher die Bewegung des vollständig aus dem Aufnahmeraum 30 herausgeschobenen Zündelements 24 parallel zur Unterseite 25 des Gasgeneratorträgers 10 begrenzt (Fig. 3). Der Anschlag 60 ist durch einen an der Unterseite 26 des Gasgeneratorträgers 10 vorgesehenen und einstückig mit dem Gasgeneratorträger 10 ausgebildeten Vorsprung gebildet.

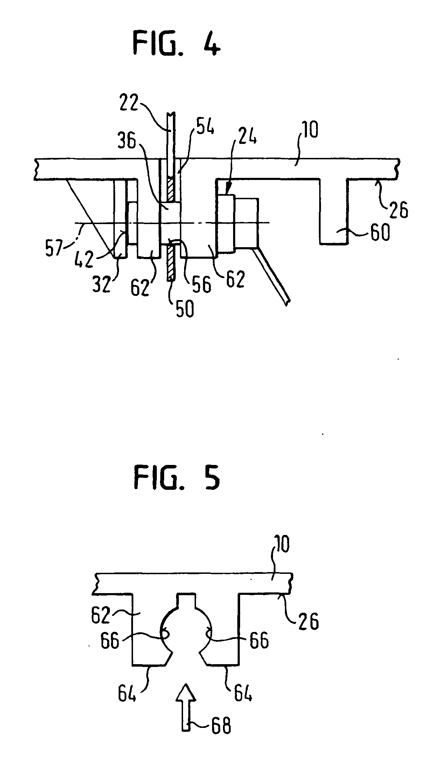

In Fig. 4 ist eine alternative Ausführungsform der Zündelementführung dargestellt, die im Unterschied zur voranstehend beschriebenen Ausführungsform nicht durch ein einen Aufnahmeraum 30 für das Zündelement 24 begrenzendes Gehäuse 28, sondern durch eine Klemmvorrichtung gebildet ist, die mindestens zwei in Richtung der Längsmittelachse 57 des aufzunehmenden Zündelements 24 zueinander beabstandete Klemmelemente 62 umfasst. Dabei sind die Klemmelemente 62 so an der Unterseite 26 des Gasgeneratorträgers 10 angeordnet, dass sich der durch das Zündelement 24 zu fixierende Endabschnitt 50 des Haltebands 22 zwischen den Klemmelementen 62 hindurch erstreckt.

Wie in Fig. 5 gezeigt ist, umfasst jedes Klemmelement 62 zwei an den Gasgeneratorträger 10 angeformte Klemmhälften 64, die zueinander beabstandet sind und an ihren zueinanderweisenden Innenseiten jeweils eine teilkreisförmige Aussparung 66 aufweisen, die zusammen einen Aufnahmeraum für das Zündelement 24 bilden. Zur Anbringung des Zündelements 24 an dem Gasgeneratorträger 10 braucht das Zündelement 24 lediglich in Richtung des Pfeils 68 von unten in die Klemmelemente 62 hineingedrückt zu werden.

Auch bei der in Fig. 4 gezeigten Zündelementführung ist eine im Bereich der vorderen Stirnseite 42 des in der Führung 28 gehaltenen Zündelements 24 angeordnete Prallwand 32 vorgesehen. Wie bereits in Verbindung mit Fig. 3 beschrieben wurde, wird die Prallwand 32 bei einer Zündung des Zündelements 24 mit Gas beaufschlagt, wodurch das Zündelement 24 in Richtung seiner Längsmittelachse 57 von der Prallwand 32 weg aus den Klemmelementen 62 herausgeschoben und der Endabschnitt 50 des Haltebands 22 zur Öffnung der Abströmöffnung des Luftsacks 14 freigegeben wird.

Die Prallwand 32 der in Fig. 4 gezeigten Ausführungsform weist keinen Entlüftungskanal auf. Stattdessen stellt sich die gewünschte Stärke des bei Zündung des Zündelements 24 erzeugten Gasdrucks dadurch ein, dass das durch das Zündelement 24 freigesetzte Gas aus dem Zwischenraum zwischen der Prallwand 32 und der vorderen Stirnseite 42 des Zündelements bzw. dem der Prallwand 32 gegenüberliegenden Klemmelement 62 frei entweichen kann.

Wie Fig. 2 und 3 zeigen, ist der Schaltmechanismus zur Freigabe des Haltebands 22 unterhalb der Luftsackhalteplatte 16 und somit vergleichsweise nahe an dem Gasgenerator 12 angeordnet. Das Halteband 22 erstreckt sich folglich aus dem Inneren des Luftsacks 14 durch die Luftsackhalteplatte 16 und den Gasgeneratorträger 10 hindurch, um durch das Zündelement 24 fixiert zu werden.

Grundsätzlich ist es aber auch möglich, den Schaltmechanismus weiter von dem Gasgenerator 12 entfernt, in Fig. 2 und 3 also weiter rechts, und insbesondere - in Richtung der Haupterstreckung des Gasgeneratorträgers 10 gesehen - mit einem Abstand zu Luftsackhalteplatte 16 vorzusehen. In diesem Fall kann das Halteband 22 nicht direkt aus dem Inneren des Luftsacks 14 durch den Gasgeneratorträger 10 hindurch zu dem Schaltmechanismus geführt werden, sondern es muss zunächst durch eine zusätzliche Öffnung in dem Luftsack 14 aus diesem heraus geführt werden, um dann mit dem Schaltmechanismus in Eingriff gebracht zu werden.

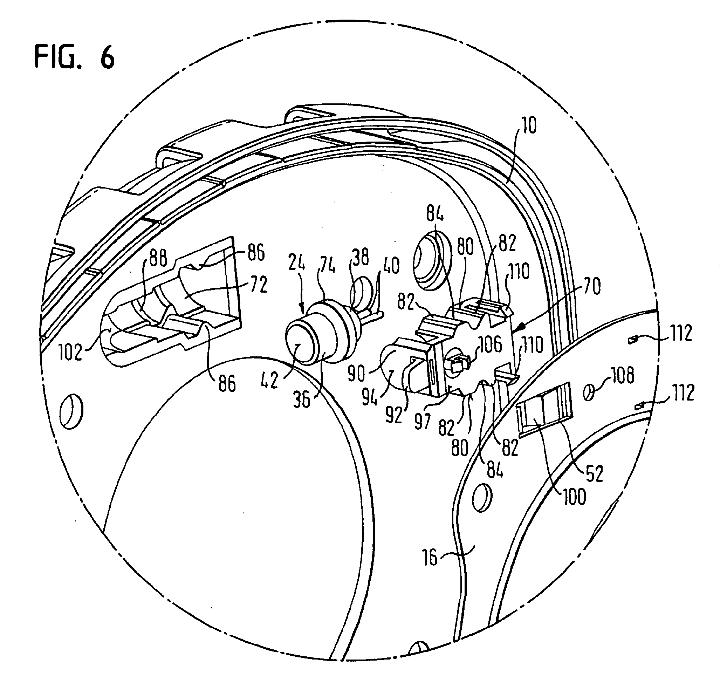

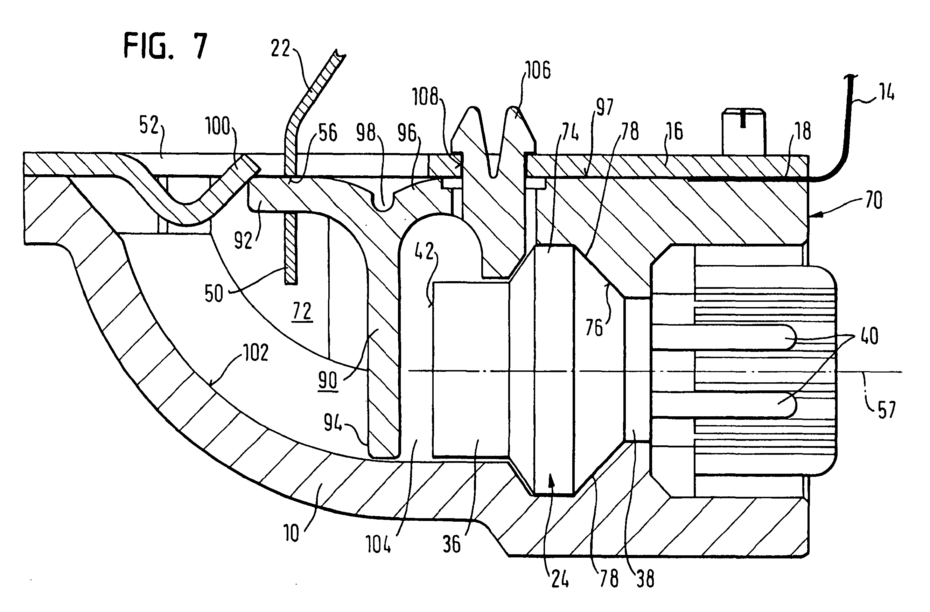

In Fig. 6 und 7 ist ein Luftsackmodul gemäß einer von der Erfindung nicht umfassten zweiten Variante dargestellt, welche sich von der voranstehend beschriebenen erfindungsgemäßen ersten Luftsackmodulvariante im Wesentlichen in der Ausbildung des Schaltmechanismus zur Fixierung bzw. Freigabe des Haltebands 22 unterscheidet. Gleichartige bzw. gleichwirkende Bauteile der zweiten Luftsackmodulvariante sind deshalb mit den gleichen Bezugszeichen versehen, wie sie bereits bei der ersten Luftsackmodulvariante verwendet wurden.

Ähnlich wie die erste Luftsackmodulvariante umfasst auch die zweite Luftsackmodulvariante einen Gasgeneratorträger 10 und eine Luftsackhalteplatte 16 zur Befestigung eines Luftsacks 14 an dem Gasgeneratorträger 10 derart, dass ein Randabschnitt 18 des Luftsacks 14 zwischen dem Gasgeneratorträger 10 und der Luftsackhalteplatte 16 eingeklemmt wird (Fig. 7). Zum Verschließen bzw. Öffnen einer Abströmöffnung des Luftsacks 14 ist auch hier ein Verschlusselement vorgesehen, welches mit einem Halteband 22 verbunden ist oder zumindest in einem von der Abströmöffnung abgewandten Bereich als Halteband 22 ausgebildet ist.

Im Unterschied zur ersten Luftsackmodulvariante umfasst der Schaltmechanismus der zweiten Luftsackmodulvariante ein Zündelement 24, das in einem Zündelementgehäuse 70 untergebracht ist, welches seinerseits in eine Aussparung 72 des Gasgeneratorträgers 10 eingesetzt ist.

Wie bei der ersten Luftsackmodulvariante weist das Zündelement 24 einen zylindrischen Hauptabschnitt 36 auf, in welchem eine Zündladung untergebracht ist, die bei einer Zündung des Zündelements 24 eine vordere Stirnseite 42 des Zündelements 24 öffnet. Ferner ist auch bei diesem Zündelement 24 ein Anschlussabschnitt 38 mit elektrischen Kontakten 40 zur Verbindung des Zündelements 24 mit einer Zündschaltung an der Rückseite des Hauptabschnitts 36 vorgesehen. Im Unterschied zur ersten Luftsackmodulvariante ist der Hauptabschnitt 36 jedoch von einer ringförmig umlaufenden Verbreiterung 74 umgeben.

Das Zündelementgehäuse 70 ist an einer Unterseite offen, damit das Zündelement 24 in das Zündelementgehäuse 70 eingebracht werden kann.

Eine einen Aufnahmeraum für das Zündelement 24 begrenzende innere Oberfläche 76 des Zündelementgehäuses 70 ist zumindest bereichsweise an die äußere Gestalt des Zündelements 24 angepasst, so dass das in das Zündelementgehäuse 70 eingesetzte Zündelement 24 gegen eine Bewegung des Zündelements 24 in Richtung der Längsmittelachse 57 des Zündelements 24 gesichert ist. Insbesondere weist das Zündelementgehäuse 70 an seiner Innenseite eine Ringnut 78 auf, deren Profil an das Profil der ringförmigen Verbreiterung 74 des Zündelements 24 angepasst ist. Somit wird zumindest bereichsweise ein Formschluss zwischen dem Zündelementgehäuse 70 und dem in das Zündelementgehäuse 70 eingesetzten Zündelement 24 erreicht.

An die offene Unterseite angrenzende, gegenüberliegende Außenseiten 80 des Zündelementgehäuses 70 weisen jeweils zwei sich quer zur Längsrichtung des eingesetzten Zündelements 24 erstreckende Vorsprünge 82 auf, die unter Bildung einer entsprechenden Vertiefung 84 zueinander beabstandet sind.

Entsprechend sind an gegenüberliegenden Innenseiten der Aussparung 72 des Gasgeneratorträgers 10 zu den Vertiefungen 84 des Zündelementgehäuses 70 komplementär ausgebildete Vorsprünge 86 vorgesehen, welche in die Vertiefungen 84 des in die Aussparung 72 eingesetzten Zündelementgehäuses 70 eingreifen und das Zündelementgehäuse 70 in der Aussparung 72 fixieren und insbesondere an einer Relativbewegung bezüglich des Gasgeneratorträgers 10 in einer zur Längsmittelachse 57 des eingesetzten Zündelements 24 parallelen Richtung hindern.

Gleichzeitig weist auch die Aussparung 72 eine ringnutartige Vertiefung 88 auf, deren Profil an das Profil der ringförmigen Verbreiterung 74 des Zündelements 24 angepasst ist und die so positioniert ist, dass die Verbreiterung 74 des zusammen mit dem Zündelementgehäuse 70 in die Aussparung 72 eingesetzten Zündelements 24 in die Vertiefung 88 eingreift.

Durch das Zusammenspiel der ringförmigen Verbreiterung 74 des Zündelements 24, der Vorsprünge 82, 86 des Zündelementgehäuses 70 bzw. der Aussparung 72, und der Vertiefungen 78, 84, 88 des Zündelementgehäuses 70 bzw. der Aussparung 72 ist zum einen das Zündelementgehäuse 70 in der Aussparung 72 und zum anderen das Zündelement 24 in dem Zündelementgehäuse 70 sowie in der Aussparung 72 fixiert und insbesondere an einer Relativbewegung bezüglich des Gasgeneratorträgers 10 in einer zur Längsmittelachse 57 des Zündelements 24 parallelen Richtung gehindert.

Zur Fixierung des Haltebands 22 weist das Zündelementgehäuse 70 einen Haken 90 auf, welcher verschwenkbar an dem das Zündelement 24 umgebenden Teil des Zündelementgehäuses 70 angelenkt ist (Fig. 7).

Der Haken 90 umfasst einen parallel zur Längsmittelachse 57 des Zündelements 24 orientierten und sich durch eine im Endabschnitt 50 des Haltebands 22 befindliche Öffnung 56 hindurch erstreckenden Halteabschnitt 92 sowie einen quer zur Längsmittelachse 57 des Zündelements 24 orientierten und der sich bei Zündung des Zündelements 24 öffnenden vorderen Stirnseite 42 des Zündelements 24 vorgelagerten Prallabschnitt 94.

Die Anbindung des Hakens 90 an den übrigen Teil des Zündelementgehäuses 70 erfolgt mittels eines gebogenen Stegabschnitts 96, welcher ausgehend von einer Oberseite 97 des Zündelementgehäuses 70 in einen Übergangsbereich zwischen Halteabschnitt 92 und Prallabschnitt 94 übergeht.

Die Krümmung des Stegabschnitts 96 ist so gewählt, dass sich der Haken 94 nur unter Überwindung einer Rückstellkraft des Stegabschnitts 96 nach oben verschwenken lässt. Zur Verbesserung der Verschwenkbarkeit ist an der Oberseite des Übergangsbereichs vom Stegabschnitt 96 zum Haken 90 eine parallel zur Sollschwenkachse verlaufende Einkerbung 98 vorgesehen, welche zu einer filmscharnierartigen Verjüngung des Stegabschnitts 96 führt.

Um den Haken 90 zusätzlich vor einer unbeabsichtigten Verschwenkung und somit Freigabe des fixierten Haltebands 22 zu sichern, ist eine Sicherungszunge 100 der Luftsackhalteplatte 16 vorgesehen, die sich in eine Durchgangsöffnung 52 der Luftsackhalteplatte 16 für das Halteband 22 hinein erstreckt. Wie Fig. 7 zeigt, ist die Sicherungszunge 100 in Form eines nach oben offenen V derart gebogen, dass sie im Bereich ihres freien Endes von oben an dem freien Ende des Halteabschnitts 92 des Hakens 90 anliegt. Die Sicherungszunge 100 ist so ausgebildet, dass bei Auslösung des Zündelements 24 der Haken 90 die Sicherungszunge 100 wegdrücken kann und/oder das freie Ende des Halteabschnitts 92 umgebogen wird, um das Halteband 22 freizugeben.

Bei Zündung des Zündelements 24 wird der vor dem Zündelement 24 befindliche Prallabschnitt 94 des Hakens 90 durch den durch das Zündelement 24 erzeugten Gasdruck beaufschlagt. Dadurch wird der Haken 90 entgegen der Rückstellkraft des Steckabschnitts 96 und unter Überwindung der Sicherungszunge 100 von dem Zündelement 24 weggedrückt und, in Fig. 7 nach oben, geschwenkt.

Das freie Ende des Prallabschnitts 94 folgt dabei dem Verlauf einer teilkreisförmig gekrümmten Oberfläche 102 der Aussparung 72, welche zusammen mit dem Prallabschnitt 94 und dem Zündelement 24 einen Druckraum 104 begrenzt.

Die durch das Zündelement 24 freigesetzte Energie wird somit zur Verschwenkung des Hakens 90 genutzt. Dies ermöglicht eine schnelle Freigabe des Haltebands 22, welches sich von dem Haken 90 lösen kann, sobald der Halteabschnitt 92 die Sicherungszunge 100 überwunden hat.

Zur Befestigung des Zündelementgehäuses 70 an der Luftsackhalteplatte 16 ist ein Steckclip 106 an der Oberseite 97 des Zündelementgehäuses 70 vorgesehen, welcher in eine entsprechend ausgebildete Stecköffnung 108 der Luftsackhalteplatte 16 einsteckbar ist.

Um das Zündelementgehäuse 70 zusätzlich an der Luftsackhalteplatte 16 zu sichern, sind in einem von dem Haken 90 abgewandten Bereich des Zündelementgehäuses 70 außerdem zwei Rasthaken 110 an dem Zündelementgehäuse 70 ausgebildet, die in entsprechenden Rastöffnungen 112 der Luftsackhalteplatte 16 einrasten können.

Auf diese Weise lässt sich bei der Montage des Luftsackmodulgehäuses zunächst das Halteband 22 mit dem Haken 90 des Zündelementgehäuses 70 in Eingriff bringen und danach das Zündelementgehäuse 70 an der Luftsackhalteplatte 16 befestigen. Anschließend kann das Zündelement 24 in das Zündelementgehäuse 70 oder in die Aussparung 72 des Gasgeneratorträgers 10 eingesetzt und die Luftsackhalteplatte 16 zusammen mit dem Zündelementgehäuse 70 an dem Gasgeneratorträger 10 befestigt werden.

Bis zum endgültigen Zusammenfügen von Luftsackhalteplatte 16 und Gasgeneratorträger 10 ist also eine optische Kontrolle darüber möglich, ob das Halteband 22 sicher mit dem Schaltmechanismus verbunden ist.

### Bezugszeichenliste

- 10: Gasgeneratorträger
- 12: Gasgenerator
- 14: Luftsack
- 16: Luftsackhalteplatte
- 18: Randabschnitt
- 22: Halteband
- 24: Zündelement
- 26: Unterseite
- 28: Führungsgehäuse
- 30: Aufnahmeraum
- 32: Prallwand
- 34: Ausstoßöffnung
- 36: Hauptabschnitt
- 38: Anschlussabschnitt
- 40: elektrischer Kontakt
- 42: vordere Stirnseite
- 46: Druckraum
- 48: Schulter
- 50: Endabschnitt
- 52: Durchgangsöffnung
- 54: Durchgangsöffnung
- 56: Öffnung
- 57: Längsmittelachse
- 58: Entlüftungskanal
- 60: Anschlag
- 62: Klemmelement
- 64: Klemmhälfte
- 66: Aussparung
- 68: Pfeil
- 70: Zündelementgehäuse
- 72: Aussparung
- 74: Verbreiterung
- 76: innere Oberfläche
- 78: Ringnut
- 80: Außenseite
- 82: Vorsprung
- 84: Vertiefung
- 86: Vorsprung
- 88: Vertiefung
- 90: Haken
- 92: Halteabschnitt
- 94: Prallabschnitt
- 96: Stegabschnitt
- 97: Oberseite
- 98: Einkerbung
- 100: Sicherungszunge
- 102: gekrümmte Oberfläche
- 104: Druckraum
- 106: Steckclip
- 108: Stecköffnung
- 110: Rasthaken
- 112: Rastöffnung

## Patentansprüche

1. Luftsackmodul für ein Kraftfahrzeug mit einem mindestens eine Abströmöffnung aufweisenden aufblasbaren Luftsack (14), einem Verschlusselement (22) zum Verschließen der Abströmöffnung und einem ein pyrotechnisches Zündelement (24) umfassenden Schaltmechanismus, wobei das Verschlusselement (22) durch den Schaltmechanismus in einer die Abströmöffnung verschließenden Lage gehalten und durch eine Auslösung des Zündelements (24) zur Öffnung der Abströmöffnung mit dem Schaltmechanismus außer Eingriff bringbar ist,
**dadurch gekennzeichnet,**
**dass** das Verschlusselement (22) in seiner die Abströmöffnung verschließenden Lage mit dem Zündelement (24) in Eingriff steht und das Zündelement (24) derart angeordnet ist, dass es sich bei seiner Auslösung relativ zum Verschlusselement (22) bewegen kann, um das Verschlusselement (22) freizugeben.

2. Luftsackmodul nach Anspruch 1,
**dadurch gekennzeichnet,**
**dass** das Zündelement (24) bezüglich des Verschlusselements (22) verschiebbar ist.

3. Luftsackmodul nach Anspruch 1 oder 2,
**dadurch gekennzeichnet,**
**dass** sich ein Abschnitt (36) des Zündelements zum Halten des Verschlusselements (22) durch eine Öffnung (56) des Verschlusselements (22) hindurch erstreckt.

4. Luftsackmodul nach einem der vorherigen Ansprüche,
**dadurch gekennzeichnet,**
**dass** das Zündelement (24) mittels einer Klemmvorrichtung (62, 64) an einem Träger (10) für einen Gasgenerator (12) zum Aufblasen des Luftsacks (14) gelagert ist.

5. Luftsackmodul nach einem der vorherigen Ansprüche,
**dadurch gekennzeichnet,**
**dass** eine Prallwand (32) im Bereich einer sich bei Auslösung des Zündelements (24) öffnenden Stirnseite (42) des Zündelements (24) vorgesehen ist.

6. Luftsackmodul nach Anspruch 5,
**dadurch gekennzeichnet,**
**dass** ein Entlüftungskanal (58) in der Prallwand (32) vorgesehen ist, durch den ein Gasdruck reduzierbar ist, welcher bei Auslösung des Zündelements (24) zwischen dem Zündelement (24) und der Prallwand (32) aufgebaut wird.

7. Luftsackmodul nach einem der vorherigen Ansprüche,
**dadurch gekennzeichnet,**
**dass** ein Anschlag (60) vorgesehen ist, um die zur Freigabe des Verschlusselements (22) erfolgende Bewegung des Zündelements (24) zu begrenzen.

## Claims

1. An airbag module for a motor vehicle comprising an inflatable airbag (14) having at least one outflow opening, a closing member (22) to close the outflow opening and a switching mechanism including a pyrotechnic ignition element (24), with the closing member (22) being held in a position closing the outflow opening by the switching mechanism and being able to be brought out of engagement with the switching mechanism by a triggering of the ignition element (24) for the opening of the outflow opening,
**characterized in that**
the closing member (22) is in engagement with the ignition element (24) in its position closing the outflow opening; and **in that** the ignition element (24) is arranged such that it can move relative to the closing member (22) on its being triggered in order to release the closing member (22).

2. An airbag module in accordance with claim 1, **characterized in that** the ignition element (24) is displaceable with respect to the closing member (22).

3. An airbag module in accordance with claim 1 or claim 2, **characterized in that** a section (36) of the ignition element extends through an opening (56) of the closing member (22) for the holding of the closing member (22).

4. An airbag module in accordance with any one of the preceding claims, **characterized in that** the ignition element (24) is supported by means of a clamping apparatus (62, 64) at a support (10) for a gas generator (12) for the inflation of the airbag (14).

5. An airbag module in accordance with any one of the preceding claims, **characterized in that** an impact wall (32) is provided in the region of an end face (42) of the ignition element (24) opening on the triggering of the ignition element (24).

6. An airbag module in accordance with claim 5, **characterized in that** a venting passage (58) is provided in the impact wall (32) by which a gas pressure can be reduced which is built up between the ignition element (24) and the impact wall (32) on the triggering of the ignition element (24).

7. An airbag module in accordance with any one of the preceding claims, **characterized in that** an abutment (60) is provided to bound the movement of the ignition element (24) taking place to release the closing member (22).

## Revendications

1. Module de coussin d'air destiné à un véhicule, comportant un coussin d'air (14) pouvant être gonflé, présentant au moins une ouverture d'évacuation, un élément de fermeture (22) permettant de fermer l'ouverture d'évacuation et un mécanisme de couplage comportant un élément d'allumage (24) pyrotechnique, sachant que l'élément de fermeture (22) est maintenu dans une position fermant l'ouverture d'évacuation grâce au mécanisme de couplage, et peut être dégagé du mécanisme de couplage par un déclenchement du mécanisme d'allumage (24) pour ouvrir l'ouverture d'évacuation,
**caractérisé en ce que** l'élément de fermeture (22) est en prise avec l'élément d'allumage (24) dans sa position fermant l'ouverture d'évacuation, et l'élément d'allumage (24) est disposé de telle sorte qu'il peut se déplacer par rapport à l'élément de fermeture (22) lors de son déclenchement, afin de libérer l'élément de fermeture (22).

2. Module de coussin d'air selon la revendication 1,
**caractérisé en ce que** l'élément d'allumage (24) peut se déplacer par rapport à l'élément de fermeture (22).

3. Module de coussin d'air selon la revendication 1 ou 2,
**caractérisé en ce qu'**une section (36) de l'élément d'allumage s'étend au travers d'une ouverture (56) de l'élément de fermeture (22) afin de maintenir l'élément de fermeture (22).

4. Module de coussin d'air selon l'une quelconque des revendications précédentes,
**caractérisé en ce que** l'élément d'allumage (24) est positionné grâce à un dispositif de serrage (62, 64) sur un support (10) destiné à un générateur de gaz (12) permettant de gonfler le coussin d'air (14).

5. Module de coussin d'air selon l'une quelconque des revendications précédentes,
**caractérisé en ce qu'**une paroi d'impact (32) est prévue dans la zone d'une face frontale (42) de l'élément d'allumage (24), qui s'ouvre lors du déclenchement de l'élément d'allumage (24).

6. Module de coussin d'air selon la revendication 5,
**caractérisé en ce qu'**un canal d'aération (58) est prévu dans la paroi d'impact (32), grâce auquel la pression du gaz peut être réduite, ce qui est réalisé lors du déclenchement de l'élément d'allumage (24) entre l'élément d'allumage (24) et la paroi d'impact (32).

7. Module de coussin d'air selon l'une quelconque des revendications précédentes,
**caractérisé en ce qu'**est prévue une butée (60) pour limiter le déplacement de l'élément d'allumage (24), réalisé afin de libérer l'élément de fermeture (22).
